(19) Europäisches Patentamt
European Patent Office
Office européen des brevets

(11) **EP 4 779 416 A1**

(12) **EUROPEAN PATENT APPLICATION**

(43) Date of publication:
**22.07.2026   Bulletin 2026/30**

(21) Application number: **25152629.9**

(22) Date of filing: **17.01.2025**

(51) International Patent Classification (IPC):
**G05B 17/02** [(2006.01)]

(52) Cooperative Patent Classification (CPC):
**G05B 17/02; G05B 13/0265**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **D, Aravind**
**689101 Thiruvalla, Kerala (IN)**
• **Nirmal, Abhinav**
**400064 Mumbai, Maharashtra (IN)**
• **Saboo, Shantanu**
**461331 Harda, MP (IN)**
• **Uppili, Umesh**
**560069 Bangalore, Karnataka (IN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND SYSTEM FOR OPTIMIZING A PROCESS IN PROCESS INDUSTRY BY AUTOMATICALLY CHANGING CONTROL VARIABLES OF THE PROCESS**

(57)     A system for optimizing a process in process industry by automatically changing control variables of the process is disclosed. The system comprises a plurality of sensors deployed in the cement kiln, an apparatus for optimizing the process, and a controller. The plurality of sensors is configured to measure real-time operational parameters comprising control variables and critical parameters of the process. The apparatus is configured to recommend optimum control variables to be set in the cement kiln for optimizing the process, validate whether the optimum control variables determined using the optimization function is within a predefined tolerance limit with respect to the control variables determined using the physics-based surrogate model, and provide feedback to the forecasting model to update the forecasting model based on the real-time critical parameters. The controller is configured to automatically change the control variables of process to the optimum control variables determined by the apparatus.

FIG 1

EP 4 779 416 A1

**Description**

The present disclosure relates to optimizing processes, and more particularly relates to a method and system for optimizing a process in process industry by automatically changing control variables of the process.

In many segments of the process industry, optimizing production processes is a significant challenge. Factors such as fluctuating raw material quality, variations in product demand, and compliance with stringent environmental and safety regulations contribute to the complexity. Traditional process optimization approaches typically rely on manual adjustments, static models, or simple automation systems that are reactive in nature and unable to adapt to dynamic operational environments.

With the rise of Industry 4.0, advancements in artificial intelligence (AI), machine learning (ML), and industrial automation technologies offer new opportunities for process optimization. These technologies utilize historical data associated with the processes to optimize the processes. By analyzing large volumes of process data, AI and ML can identify hidden patterns, predict equipment failures, and optimize operational parameters across different stages of production.

Despite these advancements, existing optimization systems in the process industry are often limited by their inability to be used in a closed loop recommendation system wherein the output from the optimization model needs to be directly implemented in the process. This holds true especially for process industries which typically have larger residence times such as Cement kiln, and distillation columns, making it difficult for the plant operator to understand the impact of a particular recommendation on the system within a short span of time.

Most of the closed loop optimization systems currently existing in process industries rely on the process operator or domain heuristics to set the control variables for the system and implement those set points using appropriately tuned PID controllers. Therefore, a human expert's intervention is required validating the recommendations provided by the optimization systems.

There is a growing need for a completely automated optimization system that can generate recommendations for altering process parameters, validate the recommendations and automatically control the process parameters to adhere to the generated recommendations.

Therefore, it is an object of the invention to provide a method for optimizing a process by automatically changing control variables of the process.

The term "forecasting model" refers to a mathematical, statistical, or computational framework designed to predict future outcomes based on historical data. Forecasting models may utilize patterns in existing data to project future trends, aiding in mitigating risks, or optimize performance. Forecasting models may include time series models such as ARIMA (Auto Regressive Integrated Moving Average), recurrent neural networks such as LSTM (Long short-term memory), and the like.

The term "control variables" refers to specific parameters that are regulated to ensure the stability and consistency of the process. These variables are critical for maintaining the desired output quality and performance, preventing deviations caused by uncontrolled fluctuations. For example, in chemical processing, temperature, pressure, and flow rate might be control variables regulated to maintain the ideal environment for a reaction.

The term "critical parameters" refer to measurable variables that are essential for evaluating the efficiency, quality, and overall success of that process. Critical parameters are often monitored in real-time and can trigger adjustments to the process if deviations occur. For example, in cement industry, critical parameters might include kiln temperature, kiln pressure, clinker quality so on and so forth.

The term "objective function" refers to an expression that defines the goal or target of optimization for a critical parameter of the process. It quantifies the desired critical parameter that needs to be maximized or minimized, depending on the process requirements. The objective function enables in optimizing the critical parameter such that the critical parameter is within the predefined maximum and minimum threshold. For example, in cement manufacturing process, the objective function might be to minimize production costs while maintaining a certain level of quality of the cement.

A "physics-based surrogate model" refers to a computational framework that approximates the behavior of a physical system through simplified models, enabling faster and more efficient optimization processes. The surrogate model is constructed using physics-based principles, which ensure that it accurately represents the underlying physical phenomena, such as material properties, dynamics, or fluid flow. As an example, for an optimization system for a cement kiln, the surrogate model mimics the physical-chemical reactions of the cement kiln.

The method comprises forecasting, using a forecasting model, critical parameters of the process by processing historical data of operational parameters comprising control variables and critical parameters associated with the process. Control variables are parameters that influences the course of the process. Control variables include but are not limited to pressure, temperature, fuel supply rate, raw material supply rate, and the like. Critical parameters are parameters that provides an information on the outcome of the process. As an example, critical parameters may include sintering zone temperature, power consumption, thermal efficiency of the kiln so on and so forth.

The method comprises determining, by a processing unit using an optimization function, optimum control variables to be set at a future timestamp using the forecasted critical parameters, wherein the critical parameters are optimized to be within a predefined maximum and minimum threshold values of critical parameters.

In an embodiment, the optimization function for the process is defined using forecasted critical parameters and weights assigned for each of the critical parameters. The weights are assigned to each of the critical parameters based on the corresponding feedback penalty calculated for each of the critical parameters.

In an embodiment, the critical parameter with highest calculated feedback penalty is assigned highest weight in the optimization function.

The method comprises determining, by the processing unit using a physics-based surrogate model, the control variables of the process for the forecasted critical parameters at the same future timestamp. The physics-based surrogate model is created using first-principles equations that replicates the physical and chemical conditions of the process.

The method comprises validating, by the processing unit, whether the optimum control variables determined using the optimization function is within a predefined tolerance limit with respect to the control variables determined using the physics-based surrogate model.

The method comprises setting, by a controller, the optimum control variables at the future time stamp if the determined optimum control variables are within an allowable tolerance limit with respect to the control variables determined using the physics-based surrogate model.

Advantageously, the controller automatically changes the control variables of the process to the optimum control variables determined by the optimization module. This eliminates the human intervention required in setting the control variables of the process.

The method comprises measuring, using sensors, the real-time critical parameters of the process after setting the optimum control variables.

The method comprises providing, by the processing unit using a feedback module, feedback to the forecasting model to update the forecasting model based on the real-time critical parameters.

The step of providing feedback to the forecasting model to update the forecasting model comprises obtaining, by the processing unit using sensors, real-time critical parameters of the process. The step further comprises calculating, by the processing unit, feedback penalty for each of the critical parameters when the critical parameter is not between the maximum and minimum threshold values of the critical parameter. The step further comprises determining, by the processing unit, whether the calculated feedback penalty for the critical parameter is beyond a predefined feedback penalty threshold. The step further comprises re-training the forecasting model, if the calculated feedback penalty for the critical parameter is beyond the predefined feedback penalty threshold.

The method comprises re-training, the forecasting model, if the optimum control variables determined using the optimization function is not within a predefined tolerance limit with respect to the control variables determined using the physics-based surrogate model.

The method comprises assigning weights to each of the critical parameters in the optimization function based on the feedback penalty calculated for each of the critical parameters. The method comprises updating the optimization function with the weights assigned to the critical parameters based on the feedback penalty. The method comprises determining, by a processing unit using an updated optimization function, optimum control variables to be set at a future timestamp.

The method comprises notifying, by the processing unit, the user if the calculated feedback penalty for the critical parameter is beyond the predefined feedback penalty threshold.

The object of the present invention is achieved by an apparatus configured for optimizing a process in process industry by automatically changing control variables of the process. The apparatus comprises one or more processing units, and a memory communicatively coupled to the one or more processing units. The memory comprises a module stored in the form of machine-readable instructions executable by the one or more processing units, wherein the module is configured to perform the method steps mentioned above.

The object of the present invention is achieved by a system for optimizing a process in a cement kiln by automatically changing control variables of the process. The system comprises a plurality of sensors deployed in the cement kiln, an apparatus for optimizing the process, and a controller. The plurality of sensors is configured to measure real-time operational parameters comprising control variables and critical parameters of the process in the cement kiln, wherein the control variables include pressure, temperature, raw material flow rate, or fuel flow rate, and the critical parameters include sintering zone temperature. The apparatus is configured to recommend optimum control variables to be set in the cement kiln for optimizing the process in cement kiln, validate whether the optimum control variables determined using the optimization function is within a predefined tolerance limit with respect to the control variables determined using the physics-based surrogate model, measure the real-time critical parameters of the process, and provide feedback to the forecasting model to update the forecasting model based on the real-time critical parameters. The controller is configured to automatically change the control variables of process to the optimum control variables determined by the apparatus.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:

FIG 1    illustrates a system 100 for optimizing a process by automatically changing control variables in a cement kiln 102, according to an embodiment of the present invention;

FIG 2    illustrates a block diagram of an apparatus 106 for optimizing a process by automatically changing the control variables, according to one embodiment of the present invention;

FIG 3    is a flowchart of a method for optimizing a process by automatically changing the control variables, according to an embodiment of the present invention;

FIG 4    is a graphical representation of change in a critical parameter over a time period;

FIG 5    is a flowchart of a step of providing feedback to the feedback model, according to an embodiment of the present invention;

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

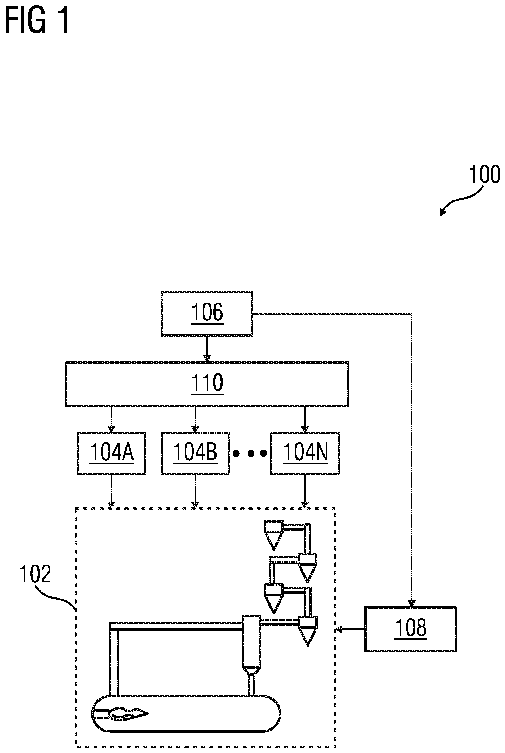

FIG. 1 illustrates a system 100 for optimizing a process by automatically changing control variables in a cement kiln 102, according to an embodiment of the present invention. The system 100 comprises a cement kiln 102, a plurality of sensors (104a-104n), a communication network 110, an apparatus 106, and a controller 108. Cement kiln 102 is a critical component in the manufacturing process of cement. The kiln operates at temperatures exceeding 1,400°C, enabling the thermal decomposition of calcium carbonate and the subsequent formation of calcium silicates.

The main reactions that take place inside the cement kiln 102 are:

a. Drying zone: The upper part of the kiln, where the water is removed from the slurry by the flow of hot gases. The temperatures in this zone are around 400 degrees Celsius.

b. Calcination zone: In this zone, the limestone present inside the slurry undergoes decomposition as follows:

$$CaCO_3 \rightarrow CaO + CO_2$$

Magnesium carbonate, which is found in some quantities with limestone deposits, also dissociates as

$$MgCO_3 \rightarrow MgO + CO_2.$$

However, the decomposition of dolomites and magnesium/dolomitic precursors is more complex than that of their pure compounds.

$$CaCO_3.MgCO_3 + Heat \rightarrow CaCO_3.MgO + CO_2$$

$$CaCO_3.MgO + Heat \text{ --7 } CaO.MgO + CO_2$$

$$CaCO_3.MgCO_3 + Heat \text{ --7 } CaO.MgO + CO_2$$

c. Clinkering zone: The lower part of the kiln (1300-1700 degree Celsius). Various fusion reactions, yielding various products as follows:

$$2CaO+SiO2\rightarrow Ca2SiO4(C2S)$$

$$3CaO+SiO2\rightarrow Ca3SiO5(C3S)$$

$$3CaO+Al2O3\rightarrow Ca3Al2O6(C3A)$$

$$4CaO+Al2O3+Fe2O3\rightarrow Ca4Al2Fe2O10(C4AF)$$

For example, the sintering zone temperature in the kiln should be kept in a particular range to produce clinker with required physical and chemical characteristics. Therefore, the critical parameters in the kiln are to be maintained in a predefined range so that the output of the kiln meets the desired characteristics.

The sensors (104a-104n) are deployed in the cement kiln 102 to measure real-time operational parameters comprising control variables and critical parameters of the process in the cement kiln 102. The control variables include pressure, temperature, raw material flow rate, or fuel flow rate. The critical parameters include sintering zone temperature, cement quality, thermal efficiency or any other similar parameter.

The apparatus 106 is configured for optimizing processes in the cement kiln 102 by automatically changing the control variables. The apparatus 106 is configured to use historical data of the operational parameters of the cement kiln to forecast critical parameters of the process. Further, the apparatus determines optimum control variables to be set at a future timestamp to optimize the process. The optimum control variables are determined to ensure that the critical parameters are within the predefined maximum and minimum threshold limits. Further, a physics-based surrogate model 224 determines the control variables of the process for the forecasted critical parameters at the same future timestamp. The apparatus then validates whether the optimum control variables determined using the optimization function is within a predefined tolerance limit with respect to the control variables determined using the physics-based surrogate model 224. If the determined optimum control variables are within an allowable tolerance limit with respect to the control variables determined using the physics-based surrogate model 224, the controller automatically changes the control variables of the process to the optimum control variables determined using the optimization function. Further, the apparatus compares the real-time critical parameters of the process after setting the optimum control variables and the forecasted critical parameters. Further, the apparatus provides feedback to the forecasting model using a feedback module to update the forecasting model based on the comparison between the forecasted critical parameters and real-time critical parameters.

The communication network 110 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

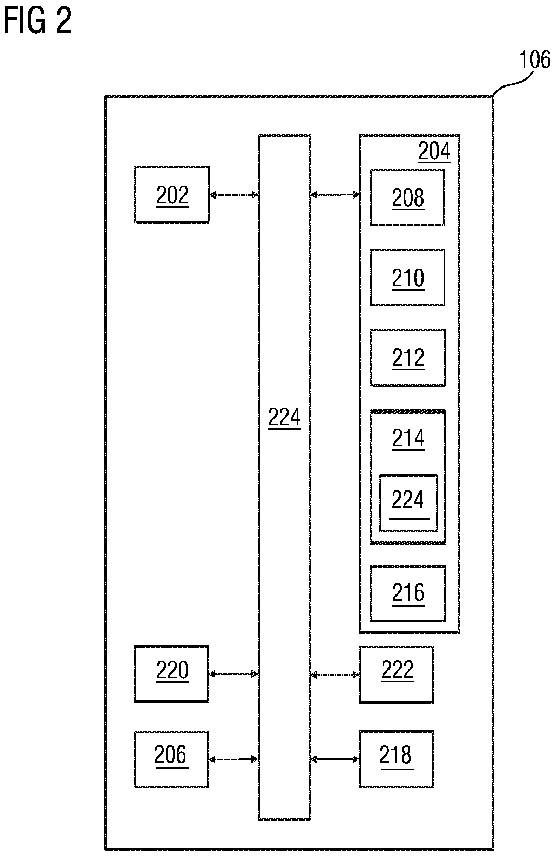

FIG. 2 illustrates a block diagram of an apparatus 106 for optimizing a process by automatically changing the control variables, according to one embodiment of the present invention. The apparatus 106 may include a processing unit 202, one or more memory 204, a database 206, a network interface 218, an input unit 220, and an output unit 222. The apparatus 106 may further include one or more buses 224 that functionally couple various components of the apparatus 106.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database 206 may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include a module stored in the form of machine-readable instructions executable by the one or more processing units 202. The memory may include multiple modules such as preprocessing module 208, forecasting model 210, optimization module 212, post-processing module 214, and feedback module 216. The multiple modules interact with each other for optimizing a process by automatically changing the control variables of the process.

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as the operations required for generating recommendations for optimizing a process. The database 206 may store historical data of operational parameters comprising control variables and critical parameters associated with the process in the form of tables or structured knowledge graphs and that may be copied to memory for use by the processing unit 202 during the execution of the computer-executable instructions. Moreover, output data generated as a result of execution of the computer-executable instructions by the processing unit 202 may be stored initially in memory and may ultimately be copied to the database 206 for non-volatile storage.

More specifically, the database 206 is configured to access the memory; and one or more program module, applications, engines, managers, computer-executable code, scripts, or the like such as, for example, the various modules of the memory such as preprocessing module 208, forecasting model 210, optimization module 212, post-processing module 214, and feedback module 216. Any of the components depicted as being stored in the database 206 may include any combination of software, firmware, and/or hardware. The software and/or firmware may include computer-executable instructions (e.g., computer-executable program code) that may be loaded into the memory for execution by one or more of the processing units 202 to perform any of the corresponding operations described earlier.

The processing unit 202 may be configured to access the memory and execute computer-executable instructions loaded therein. For example, the processing unit 202 may be configured to execute computer-executable instructions of the various program module, applications, engines, managers, or the like of the preprocessing module 208, forecasting model 210, optimization module 212, post-processing module 214, and feedback module 216 to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System -on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 may be capable of supporting any of a variety of instruction sets.

The processing unit 202, using the preprocessing module 208, preprocesses or cleanses the historical data of operational parameters of the process. Pre-processing of data is a critical step aimed at enhancing the quality and reliability of the input historical data before further analysis. This step involves a series of operations including data cleaning, normalization, transformation, and imputation of missing values. Outliers are detected and treated to ensure consistency across the historical data. Redundant and irrelevant data are systematically removed to reduce noise and improve the reliability of the historical data.

The processing unit 202, using the forecasting model 210, selects the forecasting model 210 for each of the critical parameter of the process. Further, the forecasting model 210 forecasts the critical parameters of the process. In one embodiment, the forecasting model 210 is selected from the group of hybrid neural networks, autoregressive models, ARIMA, and NARMAX.

The processing unit 202, using the optimization module 212, determines the optimum control variables for optimizing the critical parameters thereby optimizing the process. In one embodiment, the optimization module 212 uses Bayesian optimization to determine the optimum values of the control variables.

The processing unit 202, using the post-processing module 214, validates the optimum control variables determined by the optimization module. The post-processing module comprises a physics-based surrogate model 224 that calculates the control variables of the process for the forecasted critical parameters using first-principles equations. Further, the optimum control variables determined using the optimization module is validated against the control variables calculated using the physics-based surrogate model 224. If the optimum control variables determined using the optimization module is within a predefined tolerance limit with respect to the control variables calculated using the physics-based surrogate model 224, then the optimum control variables are set by the controller. If the optimum control variables determined using the optimization module is not within a predefined tolerance limit with respect to the control variables calculated using the physics-based surrogate model 224, then the forecasting model is re-trained.

The processing unit 202, using the feedback module 216, provides feedback to re-train the forecasting model. The feedback model validates the real-time critical parameters of the process after setting the optimum control variables against the maximum and minimum threshold of critical parameters. Further, based on the validation of the real-time critical parameters, the feedback module provides feedback to update or re-train the forecasting model.

The input unit 216 and the output unit 218 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 218 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 224 may include at least one of a system bus, a memory bus, an address bus, or a message bus, and may permit the exchange of information (e.g., data (including computer-executable code), signaling, etc.) between various components of the apparatus 106. The bus may include, without limitation, a memory bus or a memory controller, a peripheral bus, an accelerated graphics port, and so forth.

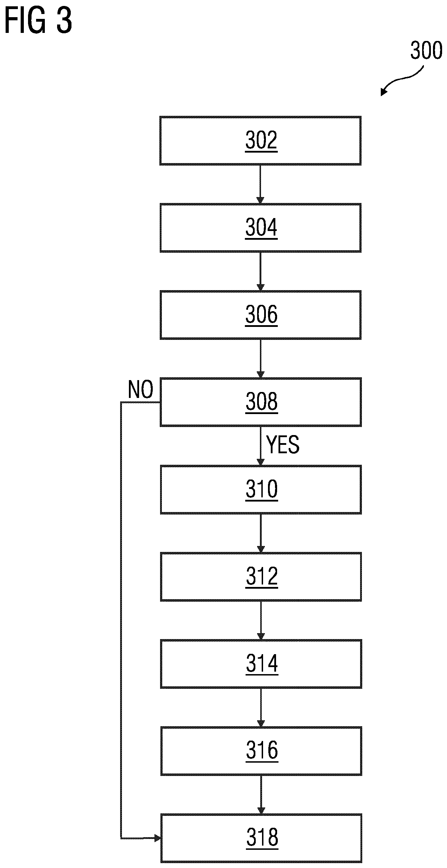

FIG. 3 is a flowchart of a method for optimizing a process by automatically changing the control variables, according to an embodiment of the present invention. At step 302, the critical parameters of the process are forecasted using a forecasting model. The forecasting model uses the historical data of operational parameters of the process to forecast the critical parameters. The historical data may be pre-processed using the pre-processing module to remove the outliers in the dataset thereby improving the reliability of historical data. Further, a forecasting model 210 is selected among a plurality of forecasting models 210 for forecasting critical parameters of the process. Therefore, each of the critical parameters may be forecasted using a different forecasting model 210 based on the sensitivity of the forecasting model 210 for forecasting a critical parameter.

At step 304, the optimum control variables are determined by the processing unit using an optimization module. An objective function is defined for each of the critical parameters of the process, wherein the objective function is used for maximizing or minimizing the critical parameter of the process. The objective function is defined using the forecasted values of the critical parameters, a maximum threshold and a minimum threshold of the critical parameter. The objective function comprises a loss function for standard deviation of the forecasted critical parameters. The standard deviation loss function ensures that the fluctuation in the forecasted critical parameters is evened out.

As an example, for a critical parameter, $\hat{Y}$ is a list of its forecasted values at various timestamps in the future and $\hat{y}$ is the latest forecasted value. Further, *lcl* and *ucl* are the minimum threshold and maximum threshold of the critical parameter respectively, i.e., for the kiln to have efficient output the critical parameter must remain within these thresholds. The objective function for each parameter is defined as follows:

$$\text{obj} = -((\max((\hat{y} - ucl), 0) + \max(lcl - \hat{y}, 0)) + 0.1 * std(\hat{Y}))$$

std refers to "standard deviation"

Further, an optimization function is defined for optimizing the process, wherein the optimization function is defined using objective functions of the critical parameters of the process and weights assigned to each of the objective functions.

The overall optimization function is represented using the following expression:

$$\text{opt\_func} = \sum -(W_i * ((\max((\hat{y}_i - ucl), 0) + \max(lcl - \hat{y}_i, 0)) + 0.1 * std(\hat{Y}_i)))$$

$W_i$ represents weight assigned to the critical parameter

The critical parameters of the process are optimized using an optimization module 212. Bayesian optimization is applied to the optimization function to optimize the critical parameter to be within the predefined maximum and minimum threshold limits. Using the optimization function, the processing unit 202 determines optimum control variables to be set at a future timestamp for optimizing the critical parameters of the process to be within the maximum and minimum threshold. Further, boundaries for the control variables may be provided to ensure that the optimum control variables are within the boundaries of the control variables.

At step 306, the control variables of the process are determined using a physics-based surrogate model 224. The physics-based surrogate model 224 uses first-principles equation to calculate the control variables for the forecasted critical parameters at that timestamp.

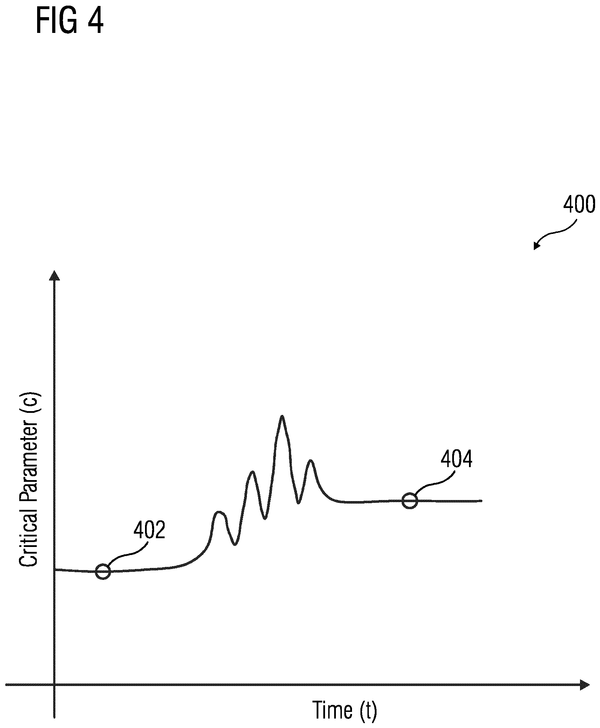

FIG. 4 is a graphical representation of change in a critical parameter over a time period. Initially, the process is at a first state 402 and the corresponding critical parameter is recorded. Further, the forecasting model forecasts the critical parameter at the second state 404 and the optimization function determines the optimum control variables for the forecasted critical parameters. The physics-based surrogate model 224 determines the control variables at the second state 404 by considering steady-state conditions. Further, the control variables determined by the physics-based surrogate model 224 is used to validate the optimum control variables determined using the optimization function.

At step 308, the processing unit validates whether the optimum control variables determined using the optimization function is within a predefined tolerance limit with respect to the control variables determined using the physics-based surrogate model 224. In one embodiment, the tolerance limit may be predefined by the user.

If the optimum control variables determined using the optimization function is not within the predefined tolerance limit with respect to the control variables determined using the physics-based surrogate model 224, then at step 318, the processing unit re-trains the forecasting model for forecasting the critical parameters.

If the optimum control variables determined using the optimization function is within the predefined tolerance limit with respect to the control variables determined using the physics-based surrogate model 224, then at step 310, the controller automatically changes the control variables of the process and sets the optimum control variables determined by the optimization module.

At step 312, the real-time critical parameters of the process after setting the optimum control variables are measured using sensors. The sensors may be deployed at various points in the process environment.

At step 314, feedback is provided using a feedback module, wherein the feedback module generates feedback by validating the real-time critical parameters against the maximum and minimum threshold limits of the critical parameters.

At step 316, the forecasting model is re-trained by the processing unit based on the comparison between the real-time critical parameters and the forecasted critical parameters. The re-training of the forecasting model ensures that there is no significant difference between the forecasted critical parameters and the real-time critical parameters.

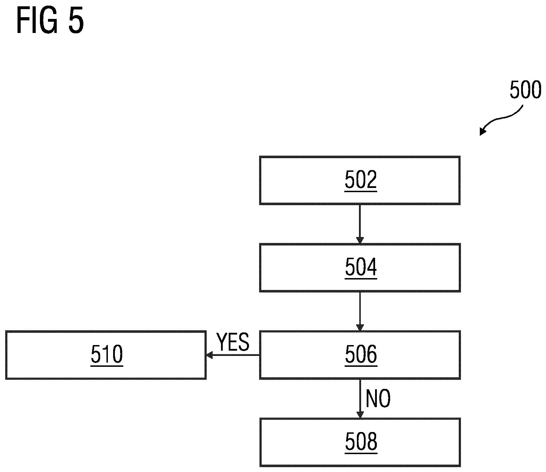

FIG. 5 is a flowchart 500 of a step of providing feedback to the feedback module, according to an embodiment of the present invention. At step 502, the real-time critical parameters of the process are obtained by the processing unit using sensors. The sensors are deployed in the process system to measure the critical parameters of the process such as sintering zone temperature, $CO_2$ emission, power consumption so on and so forth.

At step 504, feedback penalty is calculated for each of the critical parameters based on the measured real-time critical parameters. The feedback penalty is determined using the difference between the real-time critical parameter, and maximum and minimum threshold limits of the critical parameter.

The expression for feedback penalty is provided below:

$$f_i = \frac{1}{(UCL - LCL)}\left(\max\left(\left(UCL - Y_{t=t_i}\right), 0\right) + \max\left(\left(Y_{t=t_i} - LCL\right), 0\right)\right)$$

At step 506, the processing unit determines whether the determined feedback penalty for the critical parameter is within a predefined feedback penalty threshold corresponding to the critical parameter. The maximum allowable penalty for the critical parameter is defined as the feedback penalty threshold.

$t_i$ = penalty threshold defined for critical parameter $Y_i$

If the calculated feedback penalty for the critical parameter is beyond the predefined feedback penalty threshold, then at step 508, the processing unit re-trains the forecasting model. In an embodiment, the user is notified if the calculated feedback penalty for the critical parameter is beyond the predefined feedback penalty threshold.

If the calculated feedback penalty for the critical parameter is within the predefined feedback penalty threshold, then at step 510, the processing unit assigns weights to the critical parameters in the optimization function based on the feedback penalty corresponding to each of the critical parameters.

Once the weights of the critical parameters are updated in the optimization function, the updated optimization function is used by the optimization module for determining optimum control variables of the process.

Thus, the method dynamically changes the weight of the critical parameters in the optimization function after each instance of optimization of the process. Such a system with feedback mechanism for refining or retraining the forecasting model gradually improves the efficiency of the system and accuracy in determining optimum control variables. Further, the method disclosed herein utilizes two-level validation of the forecasting model. Firstly, the outcome of the forecasting model is validated using a physics-based surrogate model. Secondly, the real-time values are used to validate the forecasting model by assigning penalties for any error in forecasted critical parameters.

While the invention has been illustrated and described in detail with the help of a preferred embodiment, the invention is not limited to the disclosed examples. Other variations can be deducted by those skilled in the art without leaving the scope of protection of the claimed invention.

List of references

100 - system for optimizing a process by automatically changing control variables in a cement kiln
102 - Cement kiln
104a-104n - Plurality of sensors
106 - Apparatus for optimizing a process by automatically changing control variables
108 - Controller
110 - Communication network
202 - Processing unit
204 - Memory
206 - Database
208 - Preprocessing module
210 - Forecasting model
212 - Optimization module
214 - Post-processing module
216 - Feedback module
218 - network interface
220 - input unit
222 - output unit
224 - Bus
300 - flowchart of a method for optimizing a process by automatically changing the control variables
400 - graphical representation of change in a critical parameter over a time period
500 - flowchart of a step of providing feedback to the feedback module

## Claims

1. A method for optimizing a process in process industry by automatically changing control variables of the process, wherein the method comprises:

   forecasting, using a forecasting model (210), critical parameters of the process by processing historical data of operational parameters comprising control variables and critical parameters associated with the process;
   determining, by a processing unit (202) using an optimization function, optimum control variables to be set at a future timestamp using the forecasted critical parameters, wherein
   the critical parameters are optimized to be within a predefined maximum and minimum threshold values of critical parameters;
   determining, by the processing unit (202) using a physics-based surrogate model (224), the control variables of the process for the forecasted critical parameters at the same future timestamp;
   validating, by the processing unit (202), whether the optimum control variables determined using the optimization function is within a predefined tolerance limit with respect to the control variables determined using the physics-based surrogate model (224);
   setting, by a controller (108), the optimum control variables at the future time stamp if the determined optimum control variables are within an allowable tolerance limit with respect to the control variables determined using the physics-based surrogate model (224);
   measuring, using sensors (104), the real-time critical parameters of the process after setting the optimum control variables; and
   providing, by the processing unit (202) using a feedback module (216), feedback to the forecasting model (210) to re-train the forecasting model (210) based on the real-time critical parameters.

2. The method according to claim 1, wherein the method comprises:
   re-training the forecasting model (210), if the optimum control variables determined using the optimization function is not within a predefined tolerance limit with respect to the control variables determined using the physics-based surrogate model (224).

3. The method according to any of the preceding claims, wherein the physics-based surrogate model (224) determines the control variables by considering steady state conditions for the process at the optimum control variables determined by the optimization function.

4. The method according to any of the preceding claims, wherein providing feedback to the forecasting model (210) to re-train the forecasting model (210) comprises:

obtaining, by the processing unit (202), real-time critical parameters of the process;
calculating, by the processing unit (202), feedback penalty for each of the critical parameters when the critical parameter is not between the maximum and minimum threshold values of the critical parameter;
determining, by the processing unit (202), whether the calculated feedback penalty for the critical parameter is beyond a predefined feedback penalty threshold; and
re-training the forecasting model (210), if the calculated feedback penalty for the critical parameter is beyond the predefined feedback penalty threshold.

5. The method according to any of the preceding claims, wherein the optimization function for the process is defined using critical parameters and weights assigned for each of the critical parameters.

6. The method according to any of the preceding claims, wherein the method comprises:

assigning weights to each of the critical parameters in the optimization function based on the feedback penalty calculated for each of the critical parameters;
updating the optimization function with the weights assigned to the critical parameters based on the feedback penalty; and
determining, by the processing unit (202) using an updated optimization function,
optimum control variables to be set at a future timestamp.

7. The method according to any of the preceding claims, wherein the method comprises:
notifying, by the processing unit (202), the user if the calculated feedback penalty for the critical parameter is beyond the predefined feedback penalty threshold.

8. The method according to any of the preceding claims, wherein the critical parameter with highest calculated feedback penalty is assigned highest weight in the optimization function.

9. An apparatus (106) configured for optimizing a process in process industry by automatically changing control variables of the process, the apparatus (106) comprising:

one or more processing units (202); and
a memory (204) communicatively coupled to the one or more processing units (202), the memory (204) comprising a module stored in the form of machine-readable instructions executable by the one or more processing units (202), wherein the module is configured to perform the method steps according to claims 1 to 8.

10. A system for optimizing a process in a cement kiln (102) by automatically changing control variables of the process, wherein the system comprises:

a plurality of sensors (104) deployed in the cement kiln (102), wherein the sensors (104) are configured to measure real-time operational parameters of the process;
an apparatus (106) as claimed in claim 9 configured to:

recommend optimum control variables to be set in the cement kiln (102) for optimizing the process in cement kiln (102);
validate whether the optimum control variables determined using the optimization function is within a predefined tolerance limit with respect to the control variables determined using the physics-based surrogate model (224);
provide feedback to the forecasting model (210) to update the forecasting model (210) based on the validating real-time critical parameters against maximum and minimum threshold limits of critical parameters; and

a controller (108) communicatively connected with the apparatus (106), wherein the controller (108) is configured to automatically change the control variables of process to the optimum control variables determined by the apparatus (106).

11. A computer-program product, having computer-readable instructions stored therein, that when executed by a processing unit (202), cause the processing unit (202) to perform method steps according to any of the claims 1 to 8.

12. A computer readable medium on which program code sections of a computer program are saved, the program code sections being loadable into and/or executable in a system to make the system execute the method steps according to any of the claims 1 to 8 when the program code sections are executed in the system.

## FIG 1

# FIG 2

106
202
204
208
210
212
214
224
216
224
220
222
206
218

# FIG 3

300

```
┌──────────────┐
│      302     │
└──────────────┘
        │
        ▼
┌──────────────┐
│      304     │
└──────────────┘
        │
        ▼
┌──────────────┐
│      306     │
└──────────────┘
        │
        ▼
┌──────────────┐
│      308     │  NO
└──────────────┘
        │ YES
        ▼
┌──────────────┐
│      310     │
└──────────────┘
        │
        ▼
┌──────────────┐
│      312     │
└──────────────┘
        │
        ▼
┌──────────────┐
│      314     │
└──────────────┘
        │
        ▼
┌──────────────┐
│      316     │
└──────────────┘
        │
        ▼
┌──────────────┐
│      318     │
└──────────────┘
```

## FIG 4

# FIG 5

500

502

504

510 ←YES— 506

506 —NO→ 508

Europäisches
Patentamt

European
Patent Office

Office européen
des brevets

# EUROPEAN SEARCH REPORT

**Application Number**

EP 25 15 2629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/130462 A1 (PARIHAR MANENDRA SINGH [IN] ET AL) 27 April 2023 (2023-04-27) * the whole document * ----- | 1-12 | INV. G05B17/02 |
| X | US 2022/114401 A1 (CMIELOWSKI LUKASZ G [PL] ET AL) 14 April 2022 (2022-04-14) * the whole document * ----- | 1,9-12 | |
| X | EP 4 174 601 A1 (SIEMENS AG [DE]) 3 May 2023 (2023-05-03) * the whole document * ----- | 1,9-12 | |
| A | US 2025/004429 A1 (MERK STEPHAN [DE] ET AL) 2 January 2025 (2025-01-02) * the whole document * ----- | 1-12 | |

**TECHNICAL FIELDS SEARCHED (IPC)**

G05B
G06N

The present search report has been drawn up for all claims

| Place of search | Date of completion of the search | Examiner |
|---|---|---|
| The Hague | 11 June 2025 | José Luis Meseguer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  .......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 2629

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2025

| Patent document cited in search report | | Publication date | Patent family member(s) | | Publication date |
|---|---|---|---|---|---|
| US 2023130462 | A1 | 27-04-2023 | EP | 4170441 A1 | 26-04-2023 |
| | | | US | 2023130462 A1 | 27-04-2023 |
| US 2022114401 | A1 | 14-04-2022 | NONE | | |
| EP 4174601 | A1 | 03-05-2023 | CN | 118176467 A | 11-06-2024 |
| | | | EP | 4174601 A1 | 03-05-2023 |
| | | | EP | 4423582 A1 | 04-09-2024 |
| | | | WO | 2023072724 A1 | 04-05-2023 |
| US 2025004429 | A1 | 02-01-2025 | CN | 118159797 A | 07-06-2024 |
| | | | EP | 4384764 A1 | 19-06-2024 |
| | | | US | 2025004429 A1 | 02-01-2025 |
| | | | WO | 2023067154 A1 | 27-04-2023 |

EPO FORM P0459

For more details about this annex : see Official Journal of the European Patent Office, No. 12/82